# EUROPÄISCHE PATENTSCHRIFT

(11) **EP 2 393 687 B1**
(45) Veröffentlichungstag und Bekanntmachung des Hinweises auf die Patenterteilung: **19.04.2017**
(21) Anmeldenummer: 10701322.9
(22) Anmeldetag: 23.01.2010
(51) Int. Cl.: B60K 26/02, G05G 5/03, B60W 50/08

(54) **ENERGIEOPTIMALE BESCHLEUNIGUNGSSTEUERUNG FÜR KRAFTFAHRZEUGE**
OPTIMAL ENERGY ACCELERATION CONTROL DEVICE FOR A VEHICLE
CONTROLE D'ENERGIE OPTIMAL DE L'ACCELERATION POUR UN VEHICULE

(30) Priorität: 03.02.2009 DE 102009007278
(43) Veröffentlichungstag der Anmeldung: 14.12.2011
(73) Patentinhaber: Bayerische Motoren Werke Aktiengesellschaft, 80809 München (DE)
(72) Erfinder: SPANNHEIMER, Helmut, 85630 Neukeferloh (DE); WISSELMANN, Dirk, 85221 Dachau (DE)
(86) Internationale Anmeldenummer: PCT/EP2010/000403
(87) Internationale Veröffentlichungsnummer: WO 2010/089032

(56) Entgegenhaltungen:
- EP-A1- 1 297 987
- GB-A- 2 119 130
- US-A- 5 884 208

## Beschreibung

Die Erfindung bezieht sich auf eine energieoptimale Beschleunigungssteuerung für ein Kraftfahrzeug mit einer Brennkraftmaschine und/oder einer elektrischen Antriebsmaschine, einer Getriebeeinheit und einem vom Fahrer zu betätigenden Beschleunigungselement zum Beschleunigen des Kraftfahrzeugs nach dem Oberbegriff des Anspruchs 1.

Um energieoptimal beschleunigen zu können, muss der Fahrer bei Pkws bei niedrigen Drehzahlen das Gaspedal zu ca. ¾ des gesamten Gaspedalwegs niederdrücken. Um dem Fahrer das Auffinden der richtigen Gaspedalstellung für eine energieoptimale Beschleunigung, der allgemein ein Fahren im einem energieeffizienten Leistungsbereich zu erleichtern, gibt es bereits verschiedene Ansätze.

So ist bereits ein System mit einem aktiven Gaspedal bekannt. Dabei wird dem Fahrer die energieoptimale Beschleunigung kontinuierlich über das aktive Gaspedal durch einen geregelten Druckpunkt im Verlauf der Rückstellkraft haptisch angezeigt. Ein aktives Gaspedal ist jedoch aufwendig in der Konstruktion und der Regelung, was zu hohen Entwicklungs- und Herstellungskosten führt.

Einfachere und kostengünstigere Systeme erzeugen lediglich einen fixen Druckpunkt im Verlauf der Rückstellkraft. So offenbart die gattungsbildende DE 31 22 268 A1 eine Treibstoffsparvorrichtung in Form eines nachträglich unter dem Gaspedal einzubauenden Federelements. Dadurch wird (bei Erreichen des Federelements) ein Druckpunkt im Verlauf der Rückstellkraft erzeugt, so dass der Fahrer gehindert wird, das Gaspedal versehentlich noch weiter niederzudrücken und somit einen erhöhten Treibstoffverbrauch zu verursachen.

Aus der gattungsbildenden EP 1 297 987 A1 ist eine Motorsteuerung für ein Fahrzeug mit Handschaltgetriebe bekannt, wobei im Verlauf der Rückstellkraft des Gaspedals ebenfalls ein fixer Druckpunkt bzw. Knickpunkt vorgesehen ist, bei dessen Erreichen die Rückstellkraft verstärkt ansteigt. Bei einer Stellung des Gaspedals zwischen der Ruheposition und dem Knickpunkt kann nur ein erster Betriebsmodus der Motorsteuerung angenommen werden, wobei nach dem Knickpunkt ein zweiter Betriebsmodus angenommen wird. Der erste Betriebsmodus kann dabei ein Motorbetrieb mit einem stöchiometrischen Luft-Kraftstoff-Verhältnis sein, wobei die Drosselklappe zumindest teilweise geschlossen ist. Das teilweise Schließen der Drosselklappe bedingt eine Begrenzung der Motorleistung, wodurch ein besonders ökonomischer Betrieb des Kraftfahrzeugs sichergestellt wird. Ein derartiges Verfahren kann dazu führen, dass sich der Fahrer aufgrund der Leistungsreduzierung im ersten Betriebsmodus bevormundet fühlt, da dieser erste ökonomische Betriebsmodus bereits dann vorliegt, wenn der Fahrer das Gaspedal nicht bzw. auch nur leicht durchdrückt.

Schließlich offenbart die GB 2 119 130 A1 eine elektronisch gesteuerte Kraftstoffeinspritzanlage, durch die das Luft-Kraftstoffverhältnis allmählich von einem mageren zu einem fetten Verhältnis geändert werden soll, ohne dass jedoch ein Überfetten des Luftkraftstoffgemisches im Teillastbetrieb während einer Beschleunigungsphase verhindert werden soll, indem zwei unterschiedliche Betriebsmodi für die Kraftstoffeinspritzanlage vorgesehen sind. Dazu ist zwischen dem Gaspedal und der Drosselklappe ein Federelement vorgesehen, das dazu führt, dass die Drosselklappe bereits vor dem Durchtreten voll geöffnet wird und trotzdem eine weitere Betätigung des Gaspedals bis zum Anschlag ermöglicht wird. Bis zum Erreichen der Grenzstellung der Drosselklappe wird die Kraftstoffzumessung in Abhängigkeit vom Ansaugluftmengensignal gesteuert. Erst wenn das Gaspedal weiter durchgetreten, wird die Kraftstoffeinspritzmenge auch in Abhängigkeit von der Stellung des Gaspedals verändert.

Aufgabe der Erfindung ist es nun, eine kostengünstige und einfach realisierbare energieoptimale Beschleunigungssteuerung für ein Kraftfahrzeug anzugeben, aufgrund dessen der Fahrer nur dann in einem energieoptimalen bzw. energieeffizienten Modus unterwegs ist, wenn er dies auch tatsächlich wünscht.

Diese Aufgabe wird durch eine energieoptimale Beschleunigungssteuerung nach Anspruch 1 gelöst. Vorteilhafte Weiterbildungen ergeben sich aus den abhängigen Ansprüchen.

Grundgedanke der erfindungsgemäßen Beschleunigungssteuerung für ein Kraftfahrzeug mit einer Brennkraftmaschine und/oder einer elektrischen Antriebsmaschine, einer Getriebeeinheit und einem vom Fahrer zu betätigenden Beschleunigungselement zum Beschleunigen des Kraftfahrzeugs (wobei bei Betätigung des Beschleunigungselements auf das Beschleunigungselement eine Rückstellkraft wirkt) ist es, durch einen einfache konstruktive Ausgestaltung des Beschleunigungselements den Fahrer hinsichtlich eines energieeffizienten Beschleunigungsvorgangs zu unterstützen. Dazu wird im Verlauf der Rückstellkraft bei Betätigung des Beschleunigungselements ein fixer Knickpunkt (ähnlich dem Kick-Down-Knickpunkt bei Fahrzeugen mit Automatikgetrieben) vorgesehen, der bei entsprechender Betätigung des Beschleunigungselements für den Fahrer als Druckpunkt mit erhöhtem Widerstand spürbar ist. Der Knickpunkt kann bspw. dadurch wahrgenommen werden, dass sich die Rückstellkraft sprungartig vergrößert oder dadurch, dass sich zumindest der Gradient der Rückstellkraft an diesem Knickpunkt deutlich ändert. Der Knickpunkt bzw. der am Knickpunkt vorliegende erhöhte Widerstand kann z. B. über eine geeignet ausgelegte Zusatzfeder erzeugt werden. Die Beschleunigungssteuerung ist sowohl für Fahrzeuge mit einer Brennkraftmaschine, wie auch für Fahrzeuge mit einer hybriden Antriebseinheit aus Brennkraftmaschine und elektrischer Antriebseinheit, oder Fahrzeuge mit nur einer elektrischen Antriebseinheit geeignet (sog. Elektrofahrzeuge).

Die Erfindung zeichnet sich nun dadurch aus, dass bei einer Betätigung des Beschleunigungselements bis zum Erreichen des Knickpunkts die Beschleunigungssteuerung derart geändert wird, dass ein energieoptimales bzw. energieeffizientes Beschleunigen des Kraftfahrzeugs möglich ist. Dazu wird bei Erreichen des Knickpunkts in einen energieoptimalen Beschleunigungsmodus gewechselt. Da der Fahrerwunsch "energieoptimale Beschleunigung" über den Knickpunkt eindeutig erfasst werden kann, ist es möglich, das Fahrzeug ab Erreichen des Knickpunkt hinsichtlich einer energieoptimalen Beschleunigung optimal zu konditionieren.

Der Knickpunkt sollte im Verlauf der Rückstellkraft idealerweise dort angeordnet sein bzw. vorliegen, wo ohnehin ein energieeffizientes Beschleunigen des Fahrzeugs möglich ist, also in etwa bei drei Viertel der Strecke des gesamten Verlaufs der Rückstellkraft bzw. bei drei Viertel des Beschleunigungselement-Weges.

Vorteilhafterweise wird im Rahmen des energieoptimalen Beschleunigungsmodus zum Erreichen einer energieoptimalen Beschleunigung eine derartige Anpassung der Parametrierung vorgenommen, dass das Kraftfahrzeug bzw. die Antriebseinheit (Brennkraftmaschine und/oder einer elektrischen Antriebsmaschine) mit energieoptimaler Last, also energieeffizient beschleunigt. Dazu kann bspw. eine Anpassung der Parametrierung eines im Kraftfahrzeug hinterlegten Motorkennfeldes und/oder einer Generatorregelung und/oder der hinerlegten Schaltkennlinien vorgenommen werden.

Der bei Erreichen des Knickpunkts aktivierte energieoptimale Beschleunigungsmodus wird in einer vorteilhaften Ausgestaltung dann wieder verlassen bzw. deaktiviert, wenn der Fahrer die Position des Beschleunigungselements derart verändert, dass das Beschleunigungselement den Knickpunkt oder einen um den Knickpunkt definierten Bereich verlässt. Übertritt der Fahrer bspw. den durch den Knickpunkt verursachten Widerstand, kann er (wieder) eine erhöhte Motorleistung abrufen und das Fahrzeug mit höherer Leistung beschleunigen.

Um den Fahrer in seiner Fahrweise nicht unnötig einzuschränken, sollte der Knickpunkt, bei dessen Erreichen ein Wechsel in den energieoptimalen Beschleunigungsmodus vorgenommen wird, nur dann vorhanden bzw. erzeugt werden, wenn dies der Fahrer wünscht. So kann der Knickpunkt mit erhöhtem Widerstand nur dann aktiv sein (und in den energieoptimalen Beschleunigungsmodus gewechselt werden), wenn ein vom Fahrer bspw. mittels eines Tasters oder Druckknopfes aktivierbarer Energie-Sparmodus aktiv ist. Will der Fahrer keinen Wechsel in den energieoptimalen Beschleunigungsmodus kann der dies aktiv durch das Betätigen oder Nicht-Betätigen -je nach Ausgestaltung des Systems - des dafür vorgesehenen Bedienelements unterbinden.

Der Vollständigkeit halber ist noch zu erwähnen, dass die erfindungsgemäße Beschleunigungssteuerung für verschiedenste Kraftfahrzeuge (Pkw, Lkw, Motorrad) mit den verschiedensten Arten von Antriebseinheiten (Brennkraftmaschine, Hybridantrieb, Elektroantrieb) und von Getriebeeinheiten (Automatikgetriebe, Handschaltgetriebe) vorgesehen ist. Bei Fahrzeugen mit Automatikgetrieben kann zusätzlich zu oben definierten Knickpunkt, bei dessen Erreichen in den energieoptimalen Beschleunigungsmodus gewechselt wird, ein Kick-Down-Knickpunkt gemäß dem Stand der Technik vorgesehen sein, der im Verlauf der Rückstellkraft zumindest nicht vor dem oben definierten Knickpunkt angeordnet ist. Bei einem Wechsel in den energieoptimalen Beschleunigungsmodus kann dann eine Anpassung der Parametrierung der Schaltkennlinien vorgenommen werden. Ebenso kann der Erfindungsgedanke aber auch in Kraftfahrzeugen mit (Hand-)schaltgetriebe in Verbindung mit einer entsprechenden Schaltpunktanzeige und nur einem Knickpunkt im Verlauf der Rückstellkraft genutzt werden.

Durch die erfindungsgemäße energieoptimale Beschleunigungssteuerung erfährt der Fahrer eine optimale Unterstützung beim energieeffizienten Fahren. Der Fahrer kann zum Beschleunigen das Beschleunigungselement einfach bis zum Knickpunkt betätigen bzw. durchdrücken und somit energieoptimal beschleunigen, da das Durchtreten des als Gaspedal ausgestalteten Beschleunigungselements bis zum definierten Knickpunkt sehr leicht umsetzbar ist und die Position dann auch gut gehalten werden kann. Im Übrigen entstehen nur geringe Mehrkosten.

## Patentansprüche

1. Energieoptimale Beschleunigungssteuerung für ein Kraftfahrzeug mit einer Brennkraftmaschine und/oder einer elektrischen Antriebsmaschine, einer Getriebeeinheit und einem vom Fahrer zu betätigenden Beschleunigungselement zum Beschleunigen des Kraftfahrzeugs, wobei im Verlauf der Rückstellkraft bei Betätigung des Beschleunigungselements ein fixer Knickpunkt mit erhöhter Rückstellkraft vorgesehen ist, der vom Fahrer als Druckpunkt mit erhöhtem Widerstand spürbar ist, und wobei die Beschleunigungssteuerung dahingehend eingerichtet ist, das Kraftfahrzeug in zwei verschiedenen Betriebsmodi zu betreiben, **dadurch gekennzeichnet, dass** bei einer Betätigung des Beschleunigungselements zum Beschleunigen des Fahrzeug, die zu einem Erreichen des Knickpunktes führt, die Beschleunigungssteuerung bei Erreichen des fixen Knickpunkts in einer energieoptimalen Beschleunigungsmodus wechselt.

2. Energieoptimale Beschleunigungssteuerung nach Anspruch 1, **dadurch gekennzeichnet, dass** im Rahmen des energieoptimalen Beschleunigungsmodus für einen energieoptimale Beschleunigung eine derartige Anpassung der Parametrierung der Beschleunigungssteuerung vorgenommen wird, dass das Kraftfahrzeug mit energieoptimaler Last beschleunigt.

3. Energieoptimale Beschleunigungssteuerung nach Anspruch 2, **dadurch gekennzeichnet, dass** eine Anpassung der Parametrierung eines im Kraftfahrzeug hinterlegten Motorkennfeldes und/oder eines Generatorregelung und/oder von Schaltkennlinien vorgenommen wird.

4. Energieoptimale Beschleunigungssteuerung nach einem der vorangegangenen Ansprüche, **dadurch gekennzeichnet, dass** der energieoptimale Beschleunigungsmodus solange aktiv ist, bis aufgrund einer entsprechenden Betätigung des Beschleunigungselements der Knickpunkt oder ein um den Knickpunkt definierter Bereich im Verlauf der Rückstellkraft verlassen wird.

5. Energieoptimale Beschleunigungssteuerung nach einem der vorangegangenen Ansprüche, **dadurch gekennzeichnet, dass** bei einer Betätigung des Beschleunigungselements, die zu einem Erreichen des Knickpunktes führt, nur dann in den energieoptimalen Beschleunigungsmodus gewechselt wird, wenn ein vom Fahrer aktivierbarer Energiespar-Modus aktiv ist.

6. Energieoptimale Beschleunigungssteuerung nach einem der vorangegangenen Ansprüche, **dadurch gekennzeichnet, dass** der Knickpunkt im Verlauf der Rückstellkraft in etwa bei drei Viertel der der Strecke des gesamten Verlaufs vorgesehen ist.

7. Energieoptimale Beschleunigungssteuerung nach einem der vorangegangenen Ansprüche für ein Kraftfahrzeug mit einer Automatikgetriebeeinheit, **dadurch gekennzeichnet, dass** zusätzlich zum Knickpunkt im Verlauf der Rückstellkraft ein Kick-Down-Knickpunkt vorgesehen ist, der im Verlauf der Rückstellkraft zumindest nicht vor dem Knickpunkt angeordnet ist.

## Claims

1. An energy-optimised acceleration control for a motor vehicle having an internal combustion engine and/or an electric engine, a transmission unit and an acceleration element, to be actuated by the driver, for accelerating the motor vehicle, wherein during the course of the restoring force, on actuating the acceleration element, a fixed discontinuity with an increased restoring force is provided, which fixed discontinuity can be sensed by the driver as a pressure point with an increased resistance, and wherein the acceleration control is configured to operate the motor vehicle in two different operating modes, **characterised in that** upon actuating the acceleration element to accelerate the vehicle, which action results in reaching the discontinuity, the acceleration control changes into an energy-optimised acceleration mode on reaching the fixed discontinuity.

2. An energy-optimised acceleration control according to claim 1, **characterised in that** within the energy-optimised acceleration mode, for an energy-optimised acceleration, the parameterisation of the acceleration control is adapted such that the motor vehicle accelerates with an energy-optimised load.

3. An energy-optimised acceleration control according to claim 2, **characterised in that** the parameterisation of a motor characteristic map, stored in the motor vehicle, and/or of a generator control and/or of shifting characteristics is adapted.

4. An energy-optimised acceleration control according to any of the preceding claims, **characterised in that** the energy-optimised acceleration mode is active until, on the basis of a corresponding actuation of the acceleration element, the discontinuity or a region defined around the discontinuity is departed in the course of the restoring force.

5. An energy-optimised acceleration control according to any of the preceding claims, **characterised in that** during actuation of the acceleration element which results in reaching the discontinuity, a change is only made into the energy-optimised acceleration mode when an energy saving mode, activatable by the driver, is active.

6. An energy-optimised acceleration control according to any of the preceding claims, **characterised in that** the discontinuity in the course of the restoring force is provided at approximately three-quarters of the extent of the entire course.

7. An energy-optimised acceleration control according to any of the preceding claims for a motor vehicle with an automatic transmission unit, **characterised in that** provided in addition to the discontinuity in the course of the restoring force is a kickdown discontinuity which is at least not arranged in front of the discontinuity in the course of the restoring force.

## Revendications

1. Système de commande d'accélération optimisé en énergie pour un véhicule équipé d'un moteur à combustion interne et/ou d'un moteur électrique, d'une unité de boîte de vitesses et d'un élément d'accélération devant être actionné par le conducteur pour permettre d'accélérer le véhicule, dans lequel, au cours des variations de la force de rappel lors de l'actionnement de l'élément d'accélération, il est prévu un point d'inflexion fixe avec une force de rappel augmentée pouvant être détecté par le conducteur en tant que point de poussée à résistance augmentée, et la commande d'accélération est réalisée pour permettre d'entraîner le véhicule selon deux modes de fonctionnement différents,
**caractérisé en ce que**
lors d'un actionnement de l'élément d'accélération pour accélérer le véhicule qui conduit à l'atteinte du point d'inflexion, la commande d'accélération effectue une commutation dans un mode d'accélération optimisé en énergie lors de l'atteinte du point d'inflexion fixe.

2. Système de commande d'accélération optimisé en énergie, conforme à la revendication 1,
**caractérisé en ce que**
dans le cadre du mode d'accélération optimisé en énergie permettant une accélération optimisée en énergie, on effectue une adaptation du paramétrage du système de commande d'accélération de sorte que le véhicule soit accéléré avec une charge optimisée en énergie.

3. Système de commande d'accélération optimisé en énergie, conforme à la revendication 2,
**caractérisé en ce qu'**
on effectue une adaptation du paramétrage d'un champ de caractéristiques du moteur déposé dans le véhicule et/ou d'une régulation de générateur et/ou de caractéristiques de commutation.

4. Système de commande d'accélération optimisé en énergie, conforme à l'une des revendications précédentes,
**caractérisé en ce que**
le mode d'accélération optimisé en énergies et actif jusqu'à ce que, en raison d'un actionnement correspondant de l'élément d'accélération, le point d'inflexion ou une zone définie autour du point d'inflexion soit quitté au cours des variations de la force de rappel.

5. Système de commande d'accélération optimisé en énergie, conforme à l'une des revendications précédentes,
**caractérisé en ce que**
lors d'un actionnement de l'élément d'accélération qui conduit à l'atteinte du point d'inflexion, le mode d'accélération optimisé en énergie n'est commuté que lorsque un mode d'économie d'énergie pouvant être activé par le conducteur est actif.

6. Système de commande d'accélération optimisé en énergie, conforme à l'une des revendications précédentes,
**caractérisé en ce qu'**
au cours des variations de la force de rappel le point d'inflexion est situé essentiellement aux trois quarts de la course de variation.

7. Système de commande d'accélération optimisé en énergie, conforme à l'une des revendications précédentes destiné à un véhicule ayant une unité de boîte de vitesses automatique,
**caractérisé en ce qu'**
il est prévu, au cours des variations de la force de rappel, en plus du point d'inflexion, un point d'inflexion Kick-Down qui, au cours des variations de la force de rappel n'est au moins pas situé avant le point d'inflexion.
